# EUROPÄISCHE PATENTSCHRIFT

(11) **EP 2 288 831 B1**
(45) Veröffentlichungstag und Bekanntmachung des Hinweises auf die Patenterteilung: **22.02.2012**
(21) Anmeldenummer: 09765450.3
(22) Anmeldetag: 19.06.2009
(51) Int. Cl.: F16J 15/08

(54) **FLACHDICHTUNG**
FLAT SEAL
JOINT PLAT

(30) Priorität: 21.06.2008 DE 102008029545
(43) Veröffentlichungstag der Anmeldung: 02.03.2011
(73) Patentinhaber: Federal-Mogul Sealing Systems GmbH, 57562 Herdorf (DE)
(72) Erfinder: PREHN, Rolf, 51688 Wipperfürth (DE); CHATZIIOANNIDIS, Theofilos, 40476 Düsseldorf (DE); CAPELLMANN, Rainer, 51399 Burscheid (DE)
(74) Vertreter: Döpp, Ludger
(86) Internationale Anmeldenummer: PCT/DE2009/000841
(87) Internationale Veröffentlichungsnummer: WO 2009/152814

(56) Entgegenhaltungen:
- EP-A- 0 538 628
- EP-A- 1 522 771
- DE-A1- 1 811 789
- DE-A1- 2 714 776
- DE-A1- 3 505 721
- DE-A1- 10 119 628

## Beschreibung

Die Erfindung betrifft eine Flachdichtung, insbesondere Zylinderkopfdichtung oder Auspuffflanschdichtung.

Es ist bekannt, bei Zylinderkopfdichtungen, die aus mehreren Lagen bestehen, die unterschiedlichen Lagen mit geeigneten Fügeverfahren (z.B. Clinchen, Schweißen, Nieten) miteinander zu verbinden. Mit Hilfe so genannter Stopperelemente, die durch zusätzlich auf- bzw. eingebrachte Ringe, Lagen oder Prägungen gebildet sind, wird der benötigte Höhenunterschied am Brennraumrand zum Restflächenbereich der Flachdichtung eingestellt.

Durch die EP 0 538 628 A2 ist eine Dichtungsanordnung für eine Verbrennungskraftmaschine bekannt geworden, beinhaltend einen Zylinderkopf, einen Motorblock und eine Zylinderlaufbuchse, die in einer Bohrung des Motorblocks eingesetzt ist, sich an diesem abstützt, einen hohlen zylindrischen Teil, einen sich radial von dem zylindrischen Teil nach außen erstreckenden, ringförmigen Dichtungskragen, eine Kolbenbohrung und eine im Wesentlichen zum Zylinderkopf weisende Kragendichtungsfläche aufweist, ferner beinhaltend Dichtungsmittel, die mit der Kragendichtungsfläche und einer entsprechenden Zylinderkopfdichtungsfläche im Eingriff stehen, um den Austritt von Verbrennungsgasen aus der Kolbenbohrung zu verhindern. Wenigstens eine der beiden Dichtungsflächen ist kegelstumpfförmig ausgebildet und erstreckt sich stetig von einem radial inneren umlaufenden Bereich zu einem radial äußeren umlaufenden Bereich, wobei der radial innere Bereich weiter zu der anderen Dichtungsfläche beabstandet ist als der radial äußere Bereich.

Die DE 35 05 721 A1 offenbart eine Feuerringanordnung, die gekennzeichnet ist durch einen einteiligen Feuerring mit einer Mehrzahl von konzentrisch angeordneten Abschnitten, die integral durch eine radial verlaufende Brücke verbunden sind, wobei jeder Abschnitt ein paar axial ausgerichteter, paralleler, lastaufnehmender Oberflächen hat.

Der DE 18 11 789 ist eine Flachdichtung zu entnehmen, mit einem Verstärkungs- und/oder Dichtring in mindestens einer Durchtrittsöffnung und mit einer Metalleinfassung für Weichstoffteile der Flachdichtung im Bereich der Durchtrittsöffnung, wobei der Verstärkungs- und/oder Dichtring in der Metalleinfassung formschlüssig befestigt ist.

Die DE 101 19 628 A1 betrifft eine Brennkraftmaschine, beinhaltend einen Motorblock und mindestens einen Zylinderkopf, der gegenüber dem Motorblock durch eine Zylinderkopfdichtung abgedichtet ist, die einen im Wesentlichen ebenen Hauptkörper aus einem metallischen Werkstoff aufweist, in dem mindestens eine Öffnung für einen Zylinderraum der Brennkraftmaschine vorgesehen ist, wobei im Bereich der Öffnung ein als ringförmiger Metallkörper ausgebildetes Dichtelement angeordnet ist.

In der EP 1 522 771 wird eine metallische Flachdichtung beschrieben, umfassend eine Basisplatte, eine erste und eine zweite Platte, die an den Stirnflächen der Basisplatte angebracht und als flache Beilagen ausgebildet sind und jeweils einen äußeren Umfangsbereich aufweisen, die sich über ringförmige Sicken nach außen erstrecken und an der Basisplatte durch Laserschweißen befestigt sind.

Schließlich offenbart die DE 27 14 776 eine Zylinderkopfdichtung, bestehend aus einem gegebenenfalls metallisch verstärkten Weichstoffmaterial, das Kühlmitteldurchgänge, Schraubendurchgänge sowie Durchgänge im Bereich der Brennräume aufweist, wobei zumindest letztere von im Querschnitt U-förmigen metallischen Randeinfassungen umgeben sind. Das zwischen den Flanken der Brennraumrandeinfassung liegende Dichtungsmaterial weist einen inneren ringförmigen Bereich auf, dessen Materialverbindung zu dem umgebenden Dichtungsmaterial, zumindest auf dem überwiegenden Teil seines noch von den Flanken der Brennraumrandeinfassung übergriffenen Außenumfangs unterbrochen ist.

Der Erfindung liegt die Aufgabe zugrunde, ein neues Abdichtungskonzept für Flachdichtungen bereit zu stellen, bei der alternative Dichtungselemente zum Einsatz gelangen, die sowohl als Dichtungselement als auch als Verpressungsbegrenzer oder Stopperelement fungieren können.

Ein weiteres Ziel ist darin zu sehen, die Kraftverteilung innerhalb eines Dichtungssystems, in der Regel hervorgerufen durch Schraubenkräfte, gezielt einstellen zu können.

Die Aufgabe wird gelöst durch eine Flachdichtung, insbesondere Zylinderkopfdichtung oder Auspuffflanschdichtung, beinhaltend mindestens eine mit mindestens einer Durchgangsöffnung versehen Lage, wobei die Durchgangsöffnung mindestens einen als ringförmigen Profildraht mit im Querschnitt bananenförmiger Kontur ausgebildeten, elastisch verformbaren Profilkörper aufnimmt, der, in radialer Richtung gesehen, unterschiedliche Materialdicken aufweist und der mit mindestens einem Stützkörper in Wirkverbindung steht, dergestalt, dass im mittleren Bereich des Profildrahts der größte Materialquerschnitt vorhanden ist, während die Endbereiche Biegebereiche bilden und in gerundeter Form vorliegen.

Vorteilhafte Weiterbildungen des Erfindungsgegenstandes sind den Unteransprüchen zu entnehmen.

Der Stützkörper kann als zumindest eine Distanzscheibe ausgebildet sein.

Alternativ besteht die Möglichkeit, den Stützkörper als Einfassung auszubilden, die entweder aus zwei beabstandeten Distanzscheiben besteht oder einen, im Wesentlichen U-förmigen Querschnitt beinhaltet und den Profilkörper umschließt.

Der oder die lagenseitig vorgesehenen freien Enden des jeweiligen Stützkörpers können im Bereich ihrer lagenseitigen Enden mit der jeweiligen Lage verbunden werden. Hier bieten sich herkömmliche kraft-, form- oder stoffschlüssige Verbindungstechniken wie Clinchen, Schweißen oder Nieten an.

Einem weiteren Gedanken der Erfindung gemäß kann bei Verwendung einer Distanzscheibe als Stützkörper selbige relativ zur Lage so angeordnet werden, dass Stützkörper und Lage in einer horizontalen Ebene vorgesehen sind. In diesem Fall besteht die Möglichkeit, die Lage und den Stützkörper auf einem gemeinsamen Trägerkörper zu positionieren, wobei bedarfsweise die Lage und/oder der Stützkörper, beispielsweise durch Stumpfschweißen, mit dem Trägerkörper verbunden sind.

Einem weiteren Gedanken der Erfindung gemäß kann die Lage profilkörperseitig mit einem abgesetzten, beispielsweise geprägten, Bereich versehen werden, der zumindest einen Schenkel eines zum Einsatz gelangenden Stützkörpers zumindest partiell aufnimmt, wobei die Materialdicke des Stützkörpers größer ist als die Tiefe mindestens eines abgesetzten Bereichs.

Alternativ ist ebenfalls denkbar, das freie Schenkelende mindestens eines Stützkörpers von der Materialdicke her so auszugestalten, dass es in der Ebene der Lage verläuft . Profilkörperseitig kann bedarfsweise zumindest eine Halbsicke am Stützkörper angeformt werden.

Die alternativ vorgeschlagenen konstruktiven Maßnahmen bewirken, dass eine optimale Kraftverteilung innerhalb des Dichtungssystems eingestellt werden kann. Wie den konstruktiven Ausgestaltungsformen zu entnehmen ist, wird dies in der Regel durch Höhenunterschiede zwischen der Brennraumdichtung und der Mediendichtung erreicht. Weisen die Medien- und die Brennraumdichtung die gleiche Höhe auf (zusätzliche Voraussetzung: die verwendeten Dichtungen weisen die gleiche Festigkeit und Steifigkeit auf), so kann von einer gleichen Lastverteilung ausgegangen werden. Sind die Höhen der Medien- und der Brennraumdichtung unterschiedlich, so wird anteilig eine höhere Belastung in das Dichtelement eingeleitet. Aufgrund von Fertigungstoleranzen ist der Fall, dass beide Dichtelemente die gleiche Höhe aufweisen, statistischer Zufall. Damit jedoch die Brennraumdichtung einen höheren Anteil, z.B. 60 %, der Schraubenkräfte übernehmen kann, um die Dichtfunktion stets zu gewährleisten, wird in der Regel mit einem so genannten Überstand der Brennraumdichtung gearbeitet. Dies bedeutet, die Brennraumdichtung muss etwas höher ausgebildet sein als die Mediendichtung. Hierzu bieten sich die alternativen Ausführungsformen des Erfindungsgegenstandes an.

Der Erfindungsgegenstand ist in der Zeichnung dargestellt und wird im Folgenden näher beschrieben. Es zeigen:
- Figur 1: Profilkörper mit Einfassung;
- Figur 2: Profilkörper mit geschweißter Einfassung;
- Figur 3: Profilkörper mit Distanzscheibe;
- Figur 4: Profilkörper mit verbundener Distanzscheibe;
- Figuren 5 und 6: Profilkörper gemäß Figuren 1 bis 4 einerseits im vormontierten Zustand und andererseits im Zustand der Totalkompression.

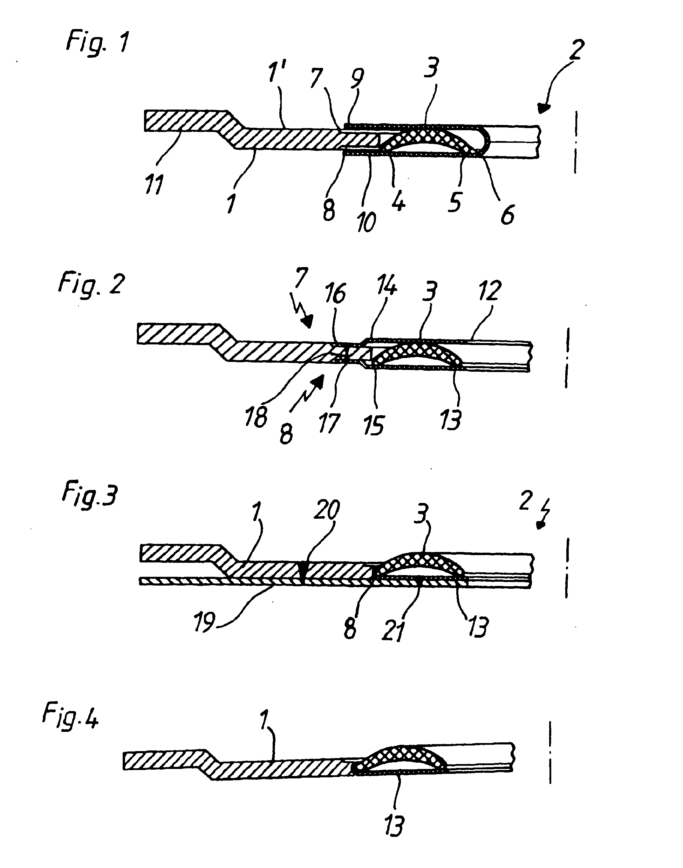

Figur 1 zeigt eine lediglich angedeutete Lage 1 einer nicht weiter dargestellten Zylinderkopfdichtung, die mindestens eine Durchgangsöffnung 2 aufweist. Alternativ kann die Lage 1 auch Teil einer Auspuffflanschdichtung sein. Innerhalb der Durchgangsöffnung 2 ist ein als Profildraht ausgebildeter Profilkörper 3 positioniert, der eine etwa bananenförmige geometrische Form aufweist. Im mittleren Bereich des Profildrahtes 3 ist der größte Materialquerschnitt vorhanden (Kernbereich), während die Endbereiche 4,5 so genannte Biegebereiche bilden und in gerundeter Form vorliegen. Der Profildraht 3 ist von einer, im Querschnitt etwa U-förmigen Einfassung 6 umgeben. Die hier als metallische Lage ausgebildete Lage 1 ist im Bereich der Durchgangsöffnung 2 mit durch Prägen erzeugten abgesetzten Bereichen 7,8 versehen, wobei die freien Schenkelenden 9,10 der Einfassung 6 in diesen abgesetzten Bereichen 7,8 enden.

Lediglich angedeutet ist, dass die Lage 1 mit einer Sicke, insbesondere einer Halbsicke 11, versehen ist. Wie bereits angeführt, soll mit dem Erfindungsgegenstand eine definierte Kraftverteilung beim Verspannen von Schrauben erzeugt werden. Zu diesem Zweck ist die Materialdicke der Einfassung 6 der Schenkelenden 9,10 größer als die Tiefe der abgesetzten Bereiche 7,8, so dass ein gewisser Überstand zur Oberfläche 1' der Lage 1 gegeben ist. Durch die Dicke der freien Enden 9,10 der Einfassung 6 in Verbindung mit den abgesetzten Bereichen 7,8 der Lage 1 wird der Höhenunterschied zwischen Brennraum- und Mediendichtung eingestellt. Bei Bedarf könnten die freien Enden 9,10 der Einfassung 6 mit der Lage 1 durch ein geeignetes Fügeverfahren verbunden werden. Letzteres ist jedoch für die Funktion nicht erforderlich.

Figur 2 zeigt den Profilkörper 3 gemäß Figur 1. Abweichend zu Figur 1 ist hier keine geschlossene Einfassung gegeben, vielmehr sind zwei Distanzscheiben 12,13 vorhanden, zwischen denen der Profilkörper 3 positioniert ist. Eine jede Distanzscheibe 12,13 ist mit einem gesickten Bereich 14,15 versehen, wobei das jeweilige freie Ende 16,17 einer jeden Distanzscheibe 12,13 mit dem abgesetzten Bereich 7,8 der Lage 1, beispielsweise durch eine Schweißnaht 18, verbunden ist.

Des Weiteren bietet die Art der Verbindung gemäß den Figuren 1 und 2 die Möglichkeit, dass der Profilkörper 3 nicht zwangsläufig zu einem Ring gefügt werden muss. Das heißt, in diesem Fall könnte eventuell ein Ring verwendet werden, bei dem, ähnlich wie bei einem Kolbenring, die beiden Enden stumpf aneinander stoßen, ohne fest miteinander verbunden zu sein.

Figur 3 zeigt die Lage 1 samt Durchgangsöffnung 2 und darin eingebrachtem Profilkörper 3. Hier ist lediglich eine einzelne untere Distanzscheibe 13 vorgesehen, wobei die Materialdicke der Distanzscheibe 13 und die Tiefe des Absatzes 8 identisch ist, so dass die Lage 1 und die Distanzscheibe 13 in ein- und derselben horizontalen Ebene angeordnet sind. Darüber hinaus liegen sowohl Teile der Lage 1 als auch die Distanzscheibe 13 auf einem gemeinsamen Stützkörper 19 auf (Protektionslage). Die Protektionslage 19 ist in diesem Beispiel durch ein geeignetes Fügeverfahren (Punktschweißen 20) mit der Lage 1 verbunden. In gleicher Weise ist auch die Distanzscheibe 13 über eine Punktschweißung 21 mit der Protektionslage 19 verbunden.

Figur 4 ist ähnlich wie Figur 3 zu sehen, mit der Ausnahme, dass keine Protektionslage gegeben ist und lediglich die Distanzscheibe 13 in der horizontalen Ebene der Lage 1 vorgesehen ist.

Der als Profilkörper ausgebildete Profildraht 3 kann entweder mit der Lage 1 teilweise oder ganz verbunden sein oder aber radial beweglich innerhalb der Durchgangsöffnung 2 vorgesehen werden. Die Lage 1 selber kann - muss jedoch nicht - aus Metall gebildet sein. Bei den in den Figuren 1 bis 4 dargestellten Ausführungsformen ergibt sich der Vorteil, dass der Profilkörper 3 nicht in unmittelbarem Kontakt zum Motorblock bzw. Zylinderkopf oder anderen Flanschflächen steht, wodurch so genannte Eingrabungen des Profilkörpers 3 in die Oberfläche des jeweiligen Flansches, respektive Motorblocks oder Zylinderkopfes, vermieden werden.

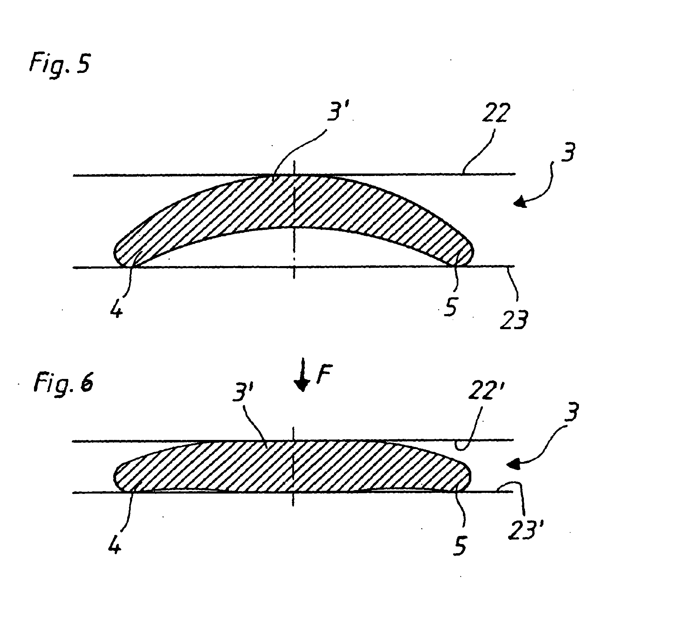

Die Figuren 5 und 6 zeigen den in den Figuren 1 bis 4 dargestellten Profilkörper 3 als Detail, zum einen im vormontierten Zustand (Figur 5) und zum anderen im Zustand der Totalkompression (Figur 6).

Zwischen den federnden, Biegebereiche bildenden, Enden 4,5 wird ein so genannter Kernbereich 3' gebildet. In Figur 5 sind ein Zylinderkopf 22 und ein Motorblock 23 lediglich angedeutet. Bei aufgebrachter Kraft F, beispielsweise durch Anziehen von Schrauben, wird der jeweilige Biegebereich 4,5 in radialer Richtung verformt, während bei Totalkompression (Figur 6) der Kernbereich 3' zwischen den Dichtflächen 22',23' eingespannt und somit ein Stopperbereich gebildet wird. Demzufolge wird eine Art Dreipunktauflage 4,5,3' gebildet, wobei die Biegebereiche 4,5 elastisch verformbar bleiben und somit auch dynamischen Dichtschwingungen zu folgen vermögen.

Nicht dargestellt, vom Schutzumfang jedoch umfasst, ist die Möglichkeit, den jeweiligen Stützkörper 6,12,13, in Umfangsrichtung gesehen, unterschiedlich dick bzw. steif auszubilden. Durch diese Maßnahme können gezielte Topographien eingestellt werden. So kann z.B. eine geringere Dicke des Stützkörpers 6,12,13 im Bereich der Schrauben zu einer Lastvergleichmäßigung, über den Umfang der Durchgangsöffnung 2 gesehen, führen.

## Patentansprüche

1. Flachdichtung, insbesondere Zylinderkopfdichtung oder Auspuffflanschdichtung, beinhaltend mindestens eine mit mindestens einer Durchgangsöffnung (2) versehen Lage (1), wobei die Durchgangsöffnung (2) mindestens einen als ringförmigen Profildraht mit im Querschnitt bananenförmiger Kontur ausgebildeten, elastisch verformbaren Profilkörper (3) aufnimmt, der, in radialer Richtung gesehen, unterschiedliche Materialdicken aufweist und der mit mindestens einem Stützkörper (6,12,13) in Wirkverbindung steht, dergestalt, dass im mittleren Bereich des Profildrahts (3) der größte Materialquerschnitt vorhanden ist, während die Endbereiche Biegebereiche bilden und in gerundeter Form vorliegen.

2. Flachdichtung nach Anspruch 1, **dadurch gekennzeichnet, dass** der Stützkörper (6,12,13) mit der Lage (1) verbunden ist.

3. Flachdichtung nach Anspruch 1 oder 2, **dadurch gekennzeichnet, dass** der Stützkörper (12,13) als Distanzscheibe ausgebildet ist.

4. Flachdichtung nach einem der Ansprüche 1 bis 3, **dadurch gekennzeichnet, dass** der Profilkörper (3) im Bereich seiner beiden Stirnflächen von mindestens einem Stützkörper (12,13) zumindest partiell eingefasst ist.

5. Flachdichtung nach einem der Ansprüche 1 bis 4, **dadurch gekennzeichnet, dass** der Stützkörper (6) als Einfassung ausgebildet ist, die den Profilkörper (3) umschließt.

6. Flachdichtung nach einem der Ansprüche 1 bis 5, **dadurch gekennzeichnet, dass** die Lage (1) durchgangsöffnungsseitig mit mindestens einem, die Dicke der Lage (1) reduzierenden abgesetzten Bereich (7,8) versehen ist und dass das radial äußere Schenkelende (9,10,16,17) des Stützkörpers (6,12,13) in diesem Bereich ausläuft.

7. Flachdichtung nach einem der Ansprüche 1 bis 6, **dadurch gekennzeichnet, dass** der Stützkörper (13) mit der Lage (1) eine gemeinsame Auflagefläche bildet.

8. Flachdichtung nach einem der Ansprüche 1 bis 7, **dadurch gekennzeichnet, dass** der Stützkörper (13) und die Lage (1) auf einem gemeinsamen Trägerkörper (19) aufliegen und bedarfsweise damit verbunden sind.

9. Flachdichtung nach einem der Ansprüche 1 bis 6, **dadurch gekennzeichnet, dass** die Materialdicke des Stützkörpers (6,12,13) größer ist als die Tiefe zumindest eines abgesetzten Bereichs (7,8) der Lage (1).

10. Flachdichtung nach einem der Ansprüche 1 bis 6, **dadurch gekennzeichnet, dass** der Stützkörper (12,13) profilkörperseitig zumindest mit einer Halbsicke (14,15) versehen ist.

11. Flachdichtung nach einem der Ansprüche 1 bis 10, **dadurch gekennzeichnet, dass** der Profilkörper (3) mit der Lage (1) verbunden ist.

12. Flachdichtung nach einem der Ansprüche 1 bis 10, **dadurch gekennzeichnet, dass** der Profilkörper (3) radial beweglich innerhalb der Durchgangsöffnung (2) der Lage (1) vorgesehen ist.

13. Flachdichtung nach einem der Ansprüche 1 bis 12, **dadurch gekennzeichnet, dass** der Profilkörper (3) als offener oder geschlossener Ring ausgebildet ist.

## Claims

1. A flat seal, in particular a cylinder head gasket or an exhaust flange gasket, comprising at least one layer (1) provided with at least one through hole (2), wherein the through hole (2) receives at least one elastically deformable profile body (3) which is designed as annular profile wire having a contour which presents a banana shaped cross section, which profile body comprises different material thicknesses, seen in radial direction, and is actively connected to at least one supporting body (6, 12, 13) such that the largest material cross section is present in the central portion of the profile wire (3), whereas the end portions form flexional portions and are designed in a rounded form.

2. A flat seal according to claim 1, **characterized in that** the supporting body (6, 12, 13) is connected to the layer (1).

3. A flat seal according to claim 1 or 2, **characterized in that** the supporting body (12, 13) is designed as distance disk.

4. A flat seal according to one of the claims 1 through 3, **characterized in that** the profile body (3) is at least partially bordered by at least one supporting body (12, 13) in the area of its two front faces.

5. A flat seal according to one of the claims 1 through 4, **characterized in that** the supporting body (6) is designed as enclosure which surrounds the profile body (3).

6. A flat seal according to one of the claims 1 through 5, **characterized in that** the layer (1) is provided, on the side of the through hole, with at least one offset portion (7, 8) which reduces the thickness of the layer (1) and that the radially outer leg end (9, 10, 16, 17) of the supporting body (6, 12, 13) runs out in this area.

7. A flat seal according to one of the claims 1 through 6, **characterized in that** the supporting body (13) forms a common bearing surface with the layer (1).

8. A flat seal according to one of the claims 1 through 7, **characterized in that** the supporting body (13) and the layer (1) rest on a common carrier body (19) and are connected thererto in case of need.

9. A flat seal according to one of the claims 1 through 6, **characterized in that** the material thickness of the supporting body (13) is greater than the depth of at least one offset portion (7, 8) of the layer (1).

10. A flat seal according to one of the claims 1 through 6, **characterized in that** the supporting body (12, 13) is provided, on the side of the profile body, with at least one half-bead (14, 15).

11. A flat seal according to one of the claims 1 through 10, **characterized in that** the profile body (3) is connected to the layer (1).

12. A flat seal according to one of the claims 1 through 10, **characterized in that** the profile body (3) is provided radially mobile within the through hole (2) of the layer (1).

13. A flat seal according to one of the claims 1 through 12, **characterized in that** the profile body (3) is designed as open or closed ring.

## Revendications

1. Garniture plate, notamment joint de culasse de cylindre ou joint de bride d'échappement, comprenant au moins une couche (1) munie d'au moins un trou de passage (2), le trou de passage (2) recevant au moins un corps profilé (3) élastiquement déformable et dessiné en tant que fil de fer profilé annulaire présentant un contour ayant une section transversale sous forme de banane, le corps profilé, vu en direction radiale, comprenant des épaisseurs de matière différentes et étant activement relié à au moins un corps d'appui (6, 12, 13), de sorte que la plus grande section transversale de matière se trouve dans la partie centrale du file de fer profilé (3) tandis que les zones d'extrémité forment des zones de flexion et sont présentes sous forme arrondie.

2. Garniture plate selon la revendication 1, **caractérisée en ce que** le corps d'appui (6, 12, 13) est relié à la couche (1).

3. Garniture plate selon la revendication 1 ou 2, **caractérisée en ce que** le corps d'appui (12, 13) est formé en tant que disque de distance.

4. Garniture plate selon l'une des revendications 1 à 3, **caractérisée en ce que** le corps profilé (3) est au moins partiellement bordé par au moins un corps d'appui (12, 13) dans la zone de ses deux fronts.

5. Garniture plate selon l'une des revendications 1 à 4, **caractérisée en ce que** le corps d'appui (6) est formé en tant que bordure qui entoure le corps profilé (3).

6. Garniture plate selon l'une des revendications 1 à 5, **caractérisée en ce que** la couche (1) est munie, du côté du trou de passage, d'au moins une partie décalée (7, 8) qui réduit l'épaisseur de la couche (1) et que l'extrémité de branche radialement extérieure (9, 10, 16, 17) du corps d'appui (6, 12, 13) se termine dans cette zone.

7. Garniture plate selon l'une des revendications 1 à 6, **caractérisée en ce que** le corps d'appui (13) forme une surface d'appui commune avec la couche (1).

8. Garniture plate selon l'une des revendications 1 à 7, **caractérisée en ce que** le corps d'appui (13) et la couche (1) s'appuient sur un corps porteur commun (19) et sont reliés à celui-ci en cas de besoin.

9. Garniture plate selon l'une des revendications 1 à 6, **caractérisée en ce que** l'épaisseur de matière du corps d'appui (6, 12, 13) est plus grande que la profondeur d'au moins une partie décalée (7, 8) de la couche (1).

10. Garniture plate selon l'une des revendications 1 à 6, **caractérisée en ce que** le corps d'appui (12, 13) est muni d'au moins une demi-moulure (14, 15) du côté du corps profilé.

11. Garniture plate selon l'une des revendications 1 à 10, **caractérisée en ce que** le corps profilé (3) est relié à la couche (1).

12. Garniture plate selon l'une des revendications 1 à 10, **caractérisée en ce que** le corps profilé (3) est prévu radialement déplaçable à l'intérieur du trou de passage (2) de la couche (1).

13. Garniture plate selon l'une des revendications 1 à 12, **caractérisée en ce que** le corps profilé (3) est formé en tant que bague ouverte ou fermée.
